# EUROPÄISCHE PATENTSCHRIFT

(11) **EP 2 202 598 B1**
(45) Veröffentlichungstag und Bekanntmachung des Hinweises auf die Patenterteilung: **23.11.2016**
(21) Anmeldenummer: 09013716.7
(22) Anmeldetag: 30.10.2009
(51) Int. Cl.: G05B 19/418, H04L 12/10

(54) **Feldgerät für eine prozesstechnische Anlage und Verfahren zum Versorgen des Feldgerätes**
Field device for a processing assembly and method for supplying the field device
Appareil de terrain pour une installation technique de processus et procédé d'alimentation de l'appareil de terrain

(30) Priorität: 23.12.2008 DE 102008062815
(43) Veröffentlichungstag der Anmeldung: 30.06.2010
(73) Patentinhaber: Samson Aktiengesellschaft, 60314 Frankfurt (DE)
(72) Erfinder: Kah, Harald, 65611 Brechen (DE); Kolbenschlag, Stefan, 64291 Darmstadt (DE)
(74) Vertreter: Schmid, Nils T.F.

(56) Entgegenhaltungen:
- EP-A1- 1 862 877
- US-A1- 2005 289 276
- US-A1- 2006 092 039

## Beschreibung

Die Erfindung betrifft ein Feldgerät, wie einen Stellungsregler, einen I/P-Wandler oder dergleichen, für eine prozesstechnische Anlage sowie ein Verfahren zum energetischen Versorgen eines Feldgeräts.

Feldgeräte, die zur Prozessautomatisierung einer prozesstechnischen Anlage eingesetzt werden, können in zwei Kategorien unterteilt werden, nämlich einerseits in Feldgeräte, die ein Prozesssignal empfangen und dieses modulieren, um ein Steuer- und/oder Regelsignal, insbesondere ein Stellsignal, abzugeben. Solche Feldgeräte werden auch als "Output-Devices" bezeichnet. Beispiele für als "Output-Device" ausgeführte Feldgeräte sind der Stellungsregler oder der Strom-Druck-Wandler (I/P-Wandler). Andererseits können Feldgeräte dazu dienen, eine physikalische Größe, wie Temperatur, Druck oder Durchfluss, für eine Prozessautomatisierung zu messen, und werden als Messumformer bezeichnet. Im Folgenden wird die Erfindung hauptsächlich in Bezug auf die erstgenannten Feldgeräte, wie einen Stellungsregler oder einen I/P-Wandler, beschrieben. Es sei klar, dass sich die Erfindung auch auf Messumformer beziehen kann.

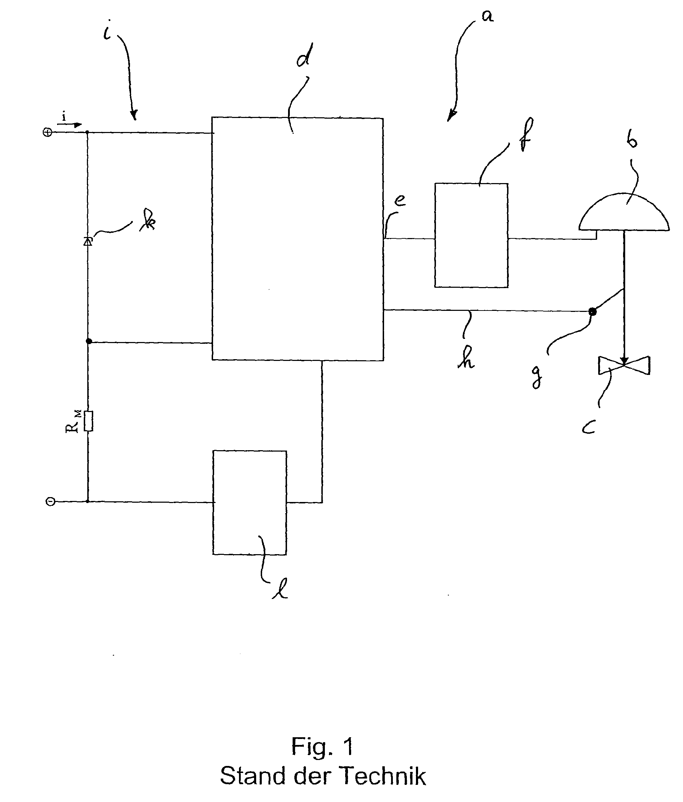

Für eine einfache Darstellung und Erläuterung insbesondere einer Eingangsseite eines gattungsgemäßen, bekannten Feldgeräts wird auf die beiliegende Figur 1 verwiesen, die ein Blockschaltbild des bekannten Feldgeräts darstellt.

Üblicherweise ist ein Feldgerät a zur Prozessautomatisierung auf folgende Weise aufgebaut. Das bekannte Feldgerät a kann einen pneumatischen Stellantrieb b aufweisen, der über eine Stellstange ein Stellventil c betätigt, das in einer Leitung angeordnet ist, welche ein Prozessfluid der prozesstechnischen Anlage (nicht näher dargestellt) führt. Das Feldgerät a hat eine Elektronikeinheit d, die einen elektrischen Signalausgang e aufweist, der mit einem I/P-Wandler f verbunden ist. Die Elektronikeinheit d ist mit einem Positionssensor g verbunden, welcher Positionssignale der Stellstange an die Elektronikeinheit d über die Leitung h weitergibt. Die Elektronikeinheit d kann einen Datenspeicher und einen Mikroprozessor aufweisen. Der Elektronikeinheit d ist eine Eingangsschaltung i vorgeschaltet, die mit einer Diode k zur Begrenzung der für die Elektronikeinheit d vorgesehenen Eingangsspannung dient. Die Eingangsschaltung i hat außerdem eine Strommesseinheit I sowie einen Messwiderstand R_{M}, an dem der Signalstrom eines Stromeingangssignals i gemessen wird. Die Strommesseinheit I führt anschließend der Elektronikeinheit d das gewandelte Stromsignal zu.

Das in Figur 1 dargestellte Feldgerät ist ein Stellungsreglersystem, das eine physikalische Größe, wie den Durchfluss der prozesstechnischen Anlage, regelt. Das Feldgerät a gemäß Figur 1 kann ein Stellsignal in Form eines Stromsignals i von 4 bis 20mA empfangen. Mit Hilfe des Positionssignals des Positionssensors g wird ein Steuersignal innerhalb der Elektronikeinheit d errechnet, welches dem I/P-Wandler f zugeführt ist. Der I/P-Wandler f erzeugt ein pneumatisches Steuersignal, das dem pneumatischen Stellantrieb e zugeführt wird, der entsprechend das Stellventil c positioniert.

Die an der Spannungsbegrenzungsdiode anliegende Spannung muss derart ausgelegt sein, dass auch bei einem Nullpunktsignal von 4mA bzw. leicht darunter (3,8mA) eine ausreichende Energieversorgung der Elektronikeinheit d gewährleistet ist. Aufgrund der Bauteiltoleranz insbesondere der Elektronikeinheit d ist es erforderlich, von einer Worstcase-Situation auszugehen, bei der die Elektronikeinheit d im Falle eines minimalen Signalstroms immer eine etwas höhere Spannung als benötigt zur Verfügung gestellt wird. Die nicht genutzte Energie wird in dem Spannungsbegrenzer der Diode k in Wärme umgewandelt. Ebenso wird bei einem höheren Stromsignal von beispielsweise 15mA alle zusätzliche Energie an der Spannungsbegrenzung in Wärme vernichtet.

Es sei klar, dass die Eingangsschaltung i auch an einen Feldbus angeschlossen werden kann. In diesem Fall wird das Feldgerät mit einem konstanten Strom von beispielsweise 15mA versorgt, während die Versorgungsspannung in einem Bereich zwischen 9 bis 32V variieren kann. Dabei kann ein Stromregler einen Strommesswiderstand nutzen, um den Schleifenstrom zu messen, und steuert einen Transistor derart an, dass der Strom konstant geregelt wird. Bei einem Feldbusanschluss sollte der Strom konstant gehalten werden, weil bei diesen digitalen Feldbussen der Strom mittelwertfrei moduliert wird, um eine digitale Information zu kodieren.

Stellungsregler und auch I/P-Wandler sind häufig aufgrund ihrer breitgefächerten Funktionalität und ihres hohen Sicherheitsstandards mit einer Anzahl von elektrischen Komponenten oder zumindest hoch qualitativen elektrischen Komponenten bestückt. Stellungsregler, welche viele Funktionsaufgaben übernehmen sollen, weisen einen Mikroprozessor, unter Umständen mehrere Datenspeicher, Kommunikationseinrichtungen, wie Funksender und Funkempfänger, und etliche Sensorik, wie einen Positionssensor, auf.

Es besteht im Allgemeinen das Interesse auf dem Gebiet der Prozessautomatisierung, Feldgeräte mit weitergehenden Zusatzfunktionen, wie Funktionsdiagnose, Eigenüberwachung, etc., auszustatten, wodurch nicht nur die Leistungsfähigkeit des Feldgeräts, sondern auch die Bauteilanzahl und der Energieverbrauch des Feldgeräts zunimmt. Jedoch ist die bei den bekannten Feldgeräten zur Verfügung stellbare elektrische Energie auch wegen Zündschutzvorschriften begrenzt.

Es gibt Bestrebungen, elektrische Energie in erhöhtem Maße für das Feldgerät bereitzustellen. Beispielsweise wird bei der als "Energy Harvesting" [Ernten von Energie] bekannten Energiebereitstellungsmethode ohnehin vorliegende Energie, wie pneumatische Antriebsenergie oder Strömungsenergie des Prozessmediums der prozesstechnischen Anlage, genutzt. Dabei werden piezoelektrische und thermoelektrische Energieumwandlungsprinzipien angewendet. Das "Energy Harvesting" hat allerdings den grundsätzlichen Nachteil eines hohen technischen Aufwands insbesondere im Hinblick auf den notwendigen Zündschutz und eine präzise Energieumwandlungstechnik.

Aus DE 10 2006 011 503 ist beispielsweise ein Prozessautomatisierungsfeldgerät, wie ein Stellungsregler, bekannt, der mit einem Energiewandler versehen ist, der aus Strömungsenergie des Prozessfluids elektrische Energie umwandelt. DE 10 2004 004 930 A1 offenbart auch eine Energieumwandlungseinheit, bei der ein mechanischer Pendel einer Pneumatikquelle ausgesetzt ist und zum Schwingen angeregt wird, welche Schwingung in elektrische Energie umgewandelt wird.

Eine weitere Art, elektrische Energie einem Feldgerät durch Energieumwandlung bereitzustellen, schlägt DE 10 2004 059 106 B4 vor, bei der zur Energieversorgung eines Feldgeräts eine Sekundärwicklung um eine elektrische Versorgungsleitung der prozesstechnischen Anlage angeordnet ist. Aufgrund der Induktionsfelder um die elektrische Versorgungsleitung kann elektrische Energie dem Feldgerät bereitgestellt werden.

Eine weitere bekannte Methode, elektrische Energie für Feldgeräte bereitzustellen, ist in WO 2006/127421 A2 beschrieben. Dabei wird das Feldgerät über eine Zenerdiode an einem HART-Feldbus gekoppelt. Ein Energieregler ist vorgesehen, der als negativer Widerstand fungiert. Bei einem konstanten Versorgungsstrom von beispielsweise 4mA bewirkt der Energieregler eine Erhöhung der anliegenden Bürdenspannung von beispielsweise 9V auf 11 V, wodurch eine erhöhte elektrische Leistung von 44mW durch die Leitwarte zur Verfügung steht. Eine derartige Zusatzenergieversorgung hat den Nachteil, dass die Leitwarte der Prozessanlage, die über beispielsweise einen Feldbus mit dem Feldgerät verbunden sind, nicht genug elektrische Energie bereitstellen kann, um die erhöhte Bürdenspannung zu liefern. Zudem ist der Regelkreis für die Erhöhung der Versorgungsspannung mittels des Energiereglers kompliziert im Aufbau. Des Weiteren ist dem Feldgerät ein höherer Energieverbrauch zuzuweisen. Außerdem ist mit der bekannten Zusatzenergieversorgung nicht sichergestellt, dass der konstant bleibende Regelungsstromwert durch die Veränderung der Bürdenspannung nicht negativ beeinflusst wird.

Aus US 2005/0289276 A1 ist ein Feldgerät bekannt, bei dem ein Kommunikationsmodul mit Energie betrieben wird, die vom Prozesskontrollkreis empfangen und gespeichert wurde.

Aus US 2006/0092039 A1 ist ein Feldgerät mit einem Energieversorgungsblock zum Akkumulieren elektrischer Ströme bekannt.

EP 1 862 877 A1 lehrt ein kabellos kommunizierendes Feldgerät mit Energiereserve.

Es ist Aufgabe der Erfindung, die Nachteile des Stands der Technik zu überwinden, insbesondere ein einfaches Feldgerät sowie ein einfaches Verfahren zum energetischen Versorgen des Feldgeräts bereitzustellen, mit dem ohne großen strukturellen und elektrotechnischen Aufwand eine Energiebereitstellung mit geringem Energieverlust realisierbar ist.

Diese Aufgabe wird durch die Merkmale von Anspruch 1 gelöst. Ein Grundgedanke der Erfindung besteht darin, eine Vernichtung von elektrischer Energie durch Wärmeentwicklung beispielsweise an einer Spannungsbegrenzung zu vermeiden, vielmehr die überschüssige Energie in einem elektrischen Speicher zu sichern, um die gespeicherte Energie gegebenenfalls während einer Energiesenke bei der herkömmlichen Energieversorgung abzugeben.

Das erfindungsgemäße Feldgerät, wie ein Stellungsregler, ein I/P-Wandler oder dergleichen, für eine prozesstechnische Anlage hat einen elektrischen Eingangsanschluss, an dem eine elektrische Energieversorgung anschließbar ist. Die Energieversorgung kann entweder durch ein Prozesssignal von 4 bis 20mA oder durch einen für einen HART-Feldbus typischen Versorgungs-Spannungsbereich von 9 bis 32V und einen Prozessstrom von 4 bis 20mA gebildet sein. Das erfindungsgemäße Feldgerät hat eine Elektronikeinheit zum Verarbeiten eines Prozesssignals. Eine zwischen dem Eingangsanschluss und der Elektronikeinheit geschaltete Eingangsschaltung ist dazu vorgesehen, die elektrische Versorgungsspannung für die Elektronikeinheit zu begrenzen. Auf diese Weise soll sichergestellt werden, dass ein ausreichender Zündschutz und ein Überspannungsschutz für die elektronischen Komponenten der Elektronikeinheit sichergestellt ist.

Erfindungsgemäß hat die Eingangsschaltung einen Speicher für elektrische Energie und eine Leistungsmanagementelektronik, die einen Energiesollwerterfasser zum Feststellen und/oder Empfangen eines für die Verarbeitung, insbesondere das Erzeugen und Abgeben, des Prozesssignals durch die Elektronikeinheit notwendigen, elektrischen Energiesollniveaus. Der Energiesollwerterfasser soll also den aktuellen Energieverbrauch der Elektronikeinheit bestimmen, um festzustellen, ob nicht der ungenutzte Teil der elektrischen Energie an der Eingangsschaltung abgeleitet werden kann, um den überschüssigen Bereich dem elektrischen Energiespeicher zuzuführen. Die Leistungsmanagementelektronik kann den das Energiesollniveau überschießenden elektrischen Energiebetrag bestimmen und zum Laden in den elektrischen Speicher ableiten.

Mit der erfindungsgemäßen Maßnahme ist es möglich, die Funktionalität von Feldgeräten zu erweitern, weil mehr elektrische Energie zur Verfügung steht, ohne eine Energieumwandlung von anderen Energiequellen oder die Energieversorgung für das Feldgerät zu ändern. Selbst die präzisen Prozesssignale, die zur Energiebereitstellung dienen, werden durch das erfindungsgemäße Energiemanagement nicht beeinflusst.

Bei einer bevorzugten Ausführung der Erfindung hat der Energiesollwerterfasser eine Signalverbindung jeweils zu einem Energieverbraucher des Feldgeräts, wie einem Mikroprozessor, einer Anzeige, wenigstens einem Sensor, einem Signalmodul, etc. Die Signalverbindung gewährleistet, dass der Energiesollwerterfasser zu jeder Zeit den tatsächlichen Energieverbrauch des jeweiligen Energieverbrauchers des Feldgeräts kennt. Zudem kann der Speicher mit einer Energieversorgungsverbindung jeweils zu einem Energieverbraucher des Feldgeräts, wie einem Mikroprozessor, einer Anzeige, wenigstens einem Sensor, einem Signalfunkmodul, etc., elektrisch verbunden sein. Über die Energieversorgung kann der Speicher den jeweiligen Energieverbraucher mit der gespeicherten elektrischen Energie betreiben.

Bei einer bevorzugten Ausführung der Erfindung ist der Speicher eigensicher ausgeführt, insbesondere in Kunststoff vergossen.

Bei einer Weiterbildung der Erfindung ist der Speicher ein Kondensator, insbesondere ein Doppelschichtkondensator, ein Elektrolytkondensator, oder ein Akkumulator, insbesondere ein Lithium-Akku.

Die Leistungsmanagementelektronik kann derart eingestellt sein, dass bei einem Ausfall der ständigen elektrischen Energieversorgung wenigstens ein vorbestimmter Verbraucher des Feldgeräts, wie ein Sensor, ein Datenspeicher, eine Kombinationseinrichtung, etc., durch den Speicher elektrisch betrieben bleibt.

Erfindungsgemäß hat die Eingangsschaltung eine Einrichtung zum Vergleichen des Energiesollniveaus mit einem an dem Eingangsanschluss anliegenden elektrischen Energieistniveau, um einen Energiebetrag zu identifizieren, der zur Speicherung auf den elektrischen Speicher abzweigbar ist. Dabei kann die Vergleichseinrichtung eine elektrische Schaltung aufweisen, in der ein Spannungsbegrenzer, insbesondere eine Diode, integriert ist.

Bei einer bevorzugten Ausführung der Erfindung ist die Vergleichseinrichtung mit einem elektrischen Widerstand, einem Elektronikteil zum Detektieren eines Spannungsabfalls eines Widerstands und einem mit dem Elektronikteil verbundenen Ladeschalter ausgestattet. Der Ladeschalter hat einen passiven Schaltzustand, bei dem eine elektrische Verbindung zwischen dem Speicher und dem Eingangsanschluss unterbrochen ist, und einen aktiven Schaltzustand, bei dem die elektrische Verbindung zwischen dem Speicher und dem Eingangsanschluss zum Laden des Speichers geschlossen ist.

Vorzugsweise spricht das Elektronikteil den Schalter zum Wechseln von dem passiven Schaltzustand in den aktiven Schaltdauerzustand dann an, wenn ein Spannungsabfall an dem Widerstand detektiert wird. Vorzugsweise ist das Elektronikteil ein Operationsverstärker. Der Ladeschalter kann ein Transistor sein.

Bei einer Weiterbildung der Erfindung hat die Leistungsmanagementelektronik einen spannungsgemäßen Stromwandler, der dem Speicher nachgeschaltet ist und abhängig von dem durch den Speicher zur Versorgung der Verbraucher des Feldgeräts die Stromstärke durch Veränderung der Spannung anpasst. Dabei kann der Spannungs-Strom-Wandler als Step-Up- und/oder als Step-Down-Regler ausgeführt sein.

Bei einer bevorzugten Ausführung der Erfindung hat die Leistungsmanagementelektronik eine Zuschaltanordnung, die eine Versorgungsverbindung jeweils zu einem Verbraucher des Feldgeräts unterbrechen oder schließen kann, wobei der jeweilige Verbraucher bei geschlossener Energieversorgungsverbindung elektrische Energie direkt oder insbesondere über einen Spannungs-Strom-Wandler von dem Speicher abzieht. Vorzugsweise hat die Zuschaltanordnung für jeden Verbraucher des Feldgeräts einen Einzelschalter, wobei jeder Einzelschalter als elektronischer Schalter ausgeführt sein kann.

Bei einer Weiterbildung der Erfindung ist die Leistungsmanagementelektronik dazu ausgelegt, bei Ausfall der elektrischen Energieversorgung und/oder bei einer Unterdrückung des Energiebedarfs des Feldgeräts vorbestimmte Einzelschalter der Zuschaltanordnung zu schließen.

Des Weiteren betrifft die Erfindung ein Verfahren zum Versorgen eines Feldgeräts, wie eines Stellgeräts, eines I/P-Wandlers oder dergleichen, für eine prozesstechnische Anlage, wobei das Feldgerät von der elektrischen Energieversorgung insbesondere einem 4 bis 20mA-Stromsignal zum Stellen einer Stellarmatur oder einem Feldbus zum Generieren und Abgeben eines Prozesssignals betrieben ist. Erfindungsgemäß wird ein von der Elektronikeinheit zum Abgeben des Prozesssignals notwendiges Energiesollniveau festgestellt und ein das Energiesollniveau überschießender elektrischer Energiebetrag der elektrischen Energieversorgung gespeichert.

Die gespeicherte Energie wird erfindungsgemäß zum Betreiben von Verbrauchern des Feldgeräts genutzt.

Es sei klar, dass das erfindungsgemäße Verfahren gemäß der Funktionsweise gemäß dem erfindungsgemäßen Feldgeräts ausgebildet sein kann.

Weitere Eigenschaften, Vorteile und Merkmale der Erfindung werden durch die folgende Beschreibung einer bevorzugten Ausführung anhand der beiliegenden Zeichnungen deutlich, in denen zeigen:
- Figur 2: ein Blockschaltbild eines erfindungsgemäßen Feldgeräts in einer ersten Ausführung;
- Figur 3: ein Blockschaltbild eines erfindungsgemäßen Feldgeräts in einer zweiten Ausführung;
- Figur 4: ein Blockschaltbild eines erfindungsgemäßen Feldgeräts in einer dritten Ausführung; und
- Figur 5: ein schematisches Blockschaltbild eines erfindungsgemäßen Feldgeräts in einer vierten Ausführung.

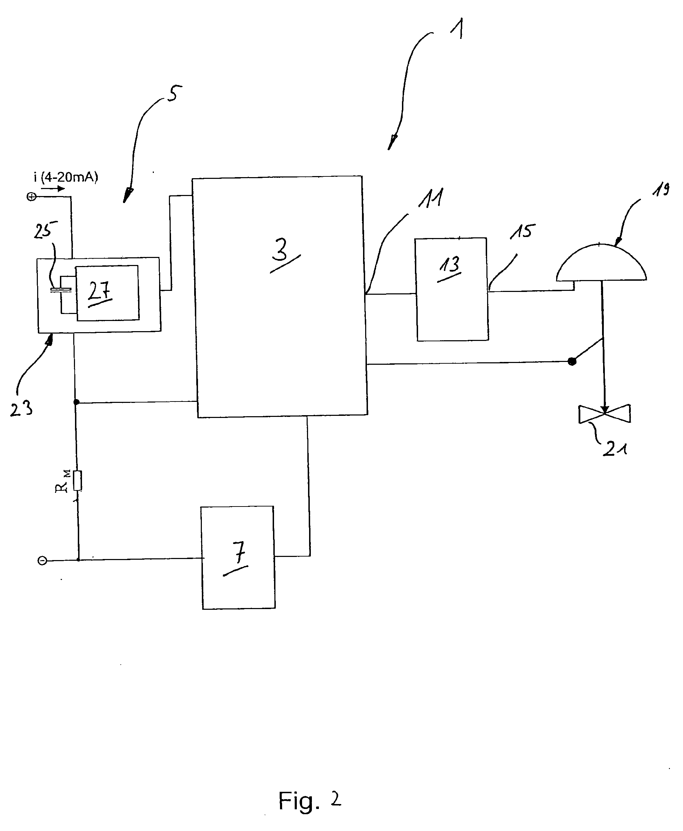

In Figur 2 ist eine bevorzugte Ausführung der Erfindung dargestellt, bei der ein als Output-Device ausgebildetes Feldgerät gemäß Figur 1 erfindungsgemäß weiterentwickelt ist. Das in Figur 2 dargestellte Feldgerät gemäß der Erfindung ist im Allgemeinen mit der Bezugsziffer 1 versehen und umfasst eine Elektronikeinheit 3, eine elektronische Eingangsschaltung 5 und eine Strommesseinheit 7 zum Umwandeln und Zuführen eines Stromsignals an die Elektronikeinheit 3.

Die Elektronikeinheit 3 hat einen pneumatischen Ausgang 11, der an einen I/P-Wandler 13 angeschlossen ist. Der I/P-Wandler 13 ist an eine pneumatische Quelle angeschlossen, die beispielsweise einen konstanten Versorgungsdruck von 6 bar bereitstellt. Ein Ausgang 15 des I/P-Wandlers 13 ist mit einem pneumatischen Stellantrieb 19 verbunden, der entsprechend dem pneumatischen Steuersignal des I/P-Wandlers 13 ein Stellventil 21 betätigt. Die Erfindung betrifft die Eingangsschaltung 5, die ein 4 bis 20mA-Prozesssignal i empfängt.

Das Prozesssignal i ist direkt mit einer Leistungsmanagementelektronik 23 verbunden, die sowohl einen elektrischen Speicher in Form eines Kondensators 25 als auch eine Schaltelektronik 27 aufweist, die dazu dient, ein Energiemanagement für die Energieverbraucher, insbesondere die Elektronikeinheit 3, des Feldgeräts 1 bereitzustellen. Die Schaltelektronik 27 lädt den Kondensator 25 abhängig von der Energiehaltigkeit des anliegenden Prozesssignals i insbesondere dann auf, wenn mehr elektrische Energie durch das Prozesssignal i zur Verfügung steht als die Elektronikeinheit 3 verbrauchen wird. Die Schaltungselektronik 27 dient ebenfalls dazu, Energie von dem Kondensator 25 abzuziehen, falls eine Einspeisung von mehr Energie in die Elektronikeinheit 3 notwendig ist. Insofern kann die Leistungsmanagementelektronik 23 des Feldgeräts 1 einen durch die Betriebsweise variierenden Energiebedarf des Feldgeräts 1 abdecken. Die Leistungsmanagementelektronik 23 kann insbesondere eine Differenz zwischen der dem Prozesssignal i zugeführten elektrischen Energie und für den Betrieb des Feldgeräts 1 abzuführende Energie erkennen, wobei die Leistungsmanagementelektronik 23 überschüssige Energie an den elektrischen beispielsweise als Kondensator 25 ausgebildeten Energiespeicher abführt. Es sei klar, dass Zusatzenergie von dem Kondensator 25 neben oder statt der Elektronikeinheit 3 auch dem Stromdruckwandler 13 zugeführt werden kann. Insbesondere kann durch den Energiespeicher 25 kurzzeitig Energie einem Verbraucher des Feldgeräts 1 zugeführt werden, um insbesondere das Versenden von Funktelegrammen zu ermöglichen. Dies bedeutet, dass selbst bei Ausfall der Gesamtenergieversorgung das Feldgerät 1 autark weiterhin einen gewissen Betrieb beispielsweise zum sicheren Speichern von Ventilpositionen gewährleisten kann. Ein Energiemehrverbrauch gehe erfindungsgemäß nicht einher.

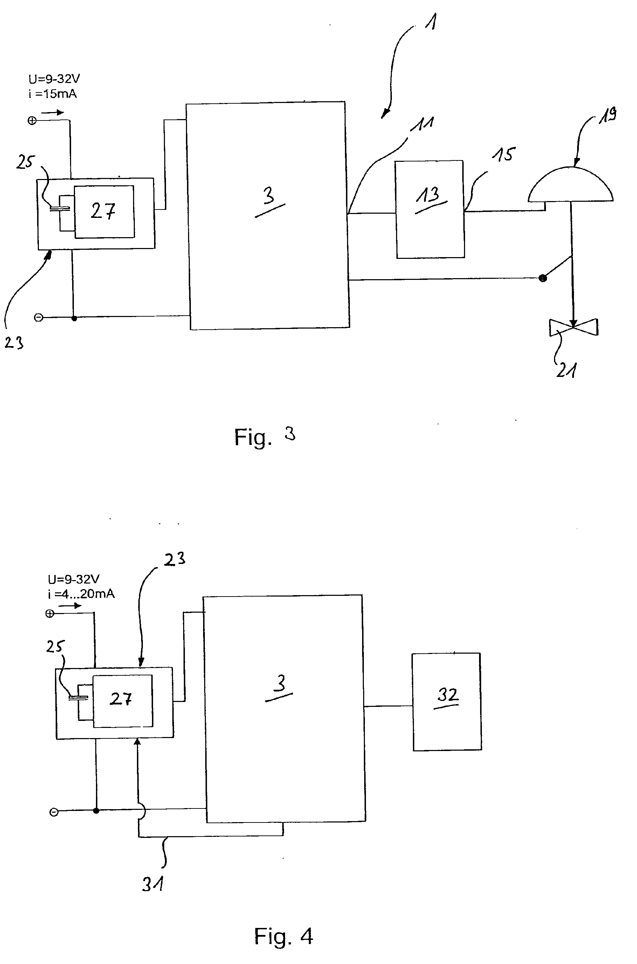

In Figur 3 ist die erfindungsgemäße Maßnahme einer Leistungsmanagementelektronik 23 im Falle eines Busfeldgerätes dargestellt. Zur einfachen Lesbarkeit werden für die gleichen oder ähnlichen Bauelemente des Feldgeräts gemäß Figur 1 dieselben Bezugszeichen verwendet.

Wie in Figur 2 wird für die Eingangsschaltung 5 gemäß Fig. 2 eine Spannungsbegrenzung in Form einer bekannten Zenerdiode k durch eine Leistungsmanagementelektronik 23 ersetzt. Diese Stromregelung ist ein integraler Bestandteil der Leistungsmanagementelektronik 23 in der Schaltanordnung 27.

Bei dem in Figur 4 gezeigten Aufbau des erfindungsgemäßen Messumformers sind wieder dieselben Bezugsziffern für die gleichen Bestandteile verwendet, um die Lesbarkeit der Figurenbeschreibung zu erleichtern.

Die Ausführung gemäß Figur 4 unterscheidet sich von der gemäß Figur 3 dadurch, dass kein Output-Device, sondern ein Messumformer vorgesehen ist und die Leistungsmanagementelektronik 23 den Energiebedarf der Elektronikeinheit 3 erkennt und Energie dann in dem Kondensator 25 speichert, wenn der Energiebedarf geringer als die anliegende Spannungsversorgung ist. Umgekehrt kennt auch die Leistungsmanagementelektronik 23 die vorherrschende Energie des Energiespeichers und kann insbesondere kurzfristig einen höheren Energiebedarf für die Elektronikeinheit 3 bereitstellen. Für diesen Fall umfasst die Leistungsmanagementelektronik 23 einen Stromregler, der ein Rückführsignal 31 der Elektronikeinheit 3 verarbeitet, welches Rückführsignal 31 beispielsweise eine physikalische Größe, wie die Position des Stellglieds, repräsentiert.

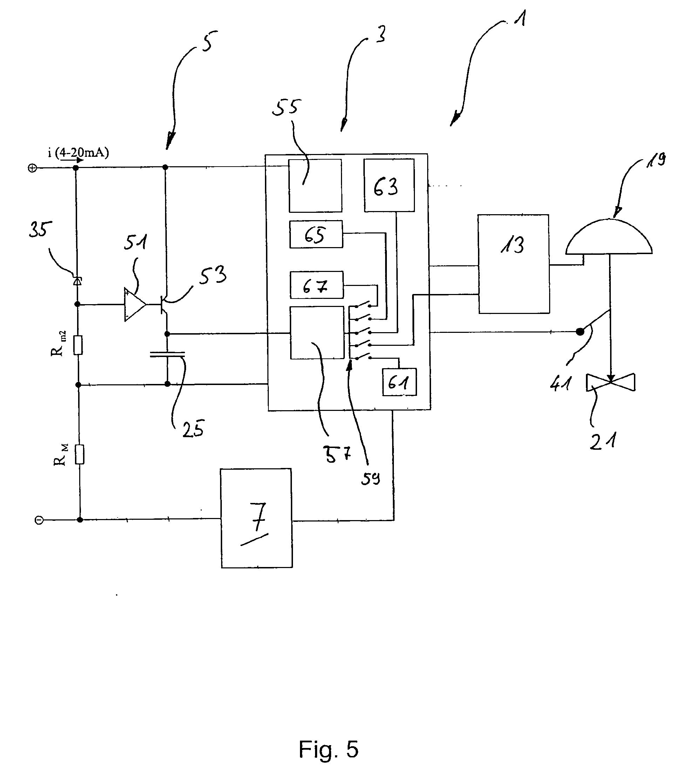

Figur 5 zeigt eine detaillierte Schaltung des erfindungsgemäßen Feldgeräts. Wieder werden für gleiche Bestandteile dieselben Bezugsziffern wie in den oben angeführten Ausführungen verwendet.

Wie in Figur 5 ersichtlich ist, ist die Eingangsschaltung 5 sowie die Elektronikeinheit 3 detaillierter dargestellt, die über einen I/P-Wandler 13 mit einem pneumatischen Stellantrieb 19 verbunden ist. Ein Positionssensor 41 tastet die Position des Stellantriebs ab und gibt Positionssignale an die Elektronikeinheit 3.

Zur Spannungsbegrenzung der Eingangsschaltung 5 dient eine Zenerdiode 35 oder eine entsprechende elektronische Schaltung, der ein Messwiderstand Rₘ₂ in Reihe zugeordnet ist. Des Weiteren hat die Eingangsschaltung 5 einen Kondensator 25 als Energiespeicher, der parallel zu einem Messwiderstand Rₘ₂ ausgeführt ist.

Ein Operationsverstärker 51 detektiert die an dem Messwiderstand Rₘ₂ abfallende Spannung, sobald ein Strom durch den Messwiderstand Rₘ₂ fließt. Der Operationsverstärker 51 spricht bereits bei minimaler Spannung an dem Messwiderstand Rₘ₂ an und steuert dann einen Transistor 53 derart an, dass der Kondensator 25 aufgeladen wird, sobald ein Strom durch den Messwiderstand Rₘ₂ fließt. Damit wird verfügbare Energie oberhalb des Minimalstroms nicht an der Zenerdiode 35 in Wärme umgewandelt, sondern vom dem Operationsverstärker 51 auf den Kondensator 25 geleitet und dort gespeichert.

Bei einem geregelten Schleifenstrom i (4 bis 20mA) von beispielsweise 4mA kann nur ein geringer Strom durch den Messwiderstand Rₘ₂ fließen. Insofern wird der Kondensator 25 nur geringfügig geladen. Liegt doch ein hoher Schleifenstrom i von beispielsweise 25mA vor, so wird der Kondensator 25 entsprechend schneller aufgeladen.

Das erfindungsgemäße Feldgerät 1 hat eine besonders ausgestaltete Elektronikeinheit 3, welche mit Komponenten versehen ist, die auch der Leistungsmanagementelektronik 23 zugeordnet werden können.

Die Elektronikeinheit 3 hat einen ersten Schaltregler 55, der den Eingang der Elektronikeinheit 3 bildet und dazu dient, die Eingangsspannung und den Eingangsstrom der Eingangselektronik 3 mit minimalen Leistungsverlusten an die Verbraucher der Elektronikeinheit 3 anzupassen. An dieser Stelle sind insbesondere das Absinken der Spannung und eine Erhöhung der Stromhöhe günstig. Üblicherweise werden derartige Funktionsschaltregler 55 als Step-Down-Schaltregler bezeichnet.

Ein zweiter Schaltregler 57 dient zur Umformung der elektrischen Spannung und elektrischen Stromstärke der auf dem Kondensator 25 gespeicherten elektrischen Ladung. Dem zweiten Schaltregler 25 ist unmittelbar eine Schaltgruppe 59 aus fünf Einzelschaltern zugeordnet, die als elektronische Schalter ausgeführt sein können. Die elektronischen Schalter können eine elektronische Verbindung zu den jeweiligen Verbrauchern der Elektronikeinheit 3 bzw. des I/P-Wandlers 13 öffnen und schließen, um eine entsprechende Energieversorgung über den Kondensator sicherzustellen.

Als Energieverbraucher sind beispielsweise anzusehen ein Sensor 61, der beispielsweise als Positionssensor ausgeführt sein kann, ein Funkmodul 63, eine Ausgabe- oder Anzeigeeinrichtung 65 und/oder ein Mikroprozessor 67. Nur in besonderen Betriebssituationen fungiert die Zenerdiode tatsächlich als Spannungsbegrenzer, bei dem elektrische Energie in Wärme umgewandelt werden soll, nämlich dann, wenn beispielsweise der Energiespeicher 25 nicht mehr in der Lage ist, elektrische Energie von dem Operationsverstärker 51 aufzunehmen.

Die Möglichkeiten der Verwendung der auf dem Kondensator 25 gespeicherten Energie sind somit vielfältig. Es kann beispielsweise ein Funksignal über Bluetooth oder Zigbee in gewissen Zeitabständen versendet werden. Bei Ausfall der elektrischen Hauptenergie (Prozesssignal i) kann der Mikroprozessor 67 und auch der I/P-Wandler 13 noch eine gewisse Zeit mit der elektrischen Energie von dem Kondensator 25 versorgt werden, um beispielsweise wichtige Betriebsdaten, wie die Position des Stellventils 21 zu speichern. Des Weiteren können auch noch von dem Mikroprozessor 67 Diagnose- und Alarmdaten zu einer Leitwarte (nicht dargestellt) versendet werden.

Auch die Anzeigeeinrichtung kann bei Ausfall des elektrischen Schleifenstroms i mit Energie versorgt werden, um beispielsweise einen Alarm anzuzeigen und zu erzeugen.

Sollte der Sensor 61 mit Strom versorgt werden, kann bei einem Stromausfall weiterhin beispielsweise ein Stelldruck gemessen werden, wenn es sich um einen Drucksensor handelt.

Es kann vorgesehen sein, eine Spannungsmessung dem Kondensator 25 zuzuordnen, um dessen gespeicherte Energie zu erfassen. Je zu versorgende Verbraucher (61 bis 67) kann der Schaltregler 25 entweder als Step-Up- oder als Step-Down-Regler gestaltet sein.

Um das erfindungsgemäße Feldgerät 1 eigensicher zu machen, kann es vorgesehen sein, den Kondensator 25 in Kunststoff zu vergießen. Vorzugsweise ist der Kondensator 25 ein als Doppelschichtkondensator, wie der sogenannte GoldCap, oder ein Elektrolytkondensator oder ein Lithium-Akku ausgebildet. Der Energiespeicher kann weiterhin aus einer Parallelschaltung vieler kleinerer Energiespeicher gebildet sein, die jeweils zur Versorgung eines unterschiedlichen Verbrauchers vorgesehen sind.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- a: Feldgerät
- b: Stellantrieb
- c: Stellventil
- d: Elektronikeinheit
- e: Signalausgang
- f: I/P-Wandler
- g: Positionssensor
- h: Leitung
- i: Stromeingangssignal
- k: Diode
- l: Strommesseinheit
- R_{M}: Messwiderstand
- Rₘ₂: Messwiderstand
- U: Versorgungsspannung
- 1: Feldgerät
- 3: Elektronikeinheit
- 5: Eingangsschaltung
- 7: Strommesseinheit
- 11: pneumatischer Ausgang
- 13: I/P-Wandler
- 15: Ausgang
- 19: pneumatischer Stellantrieb
- 21: Stellventil
- 23: Leistungsmanagementelektronik
- 25: Kondensator
- 27: Schaltelektronik
- 31: Rückführsignal
- 35: Zenerdiode
- 41: Positionssensor
- 51: Operationsverstärker
- 53: Transistor
- 55,57: Schaltregler
- 59: Schaltgruppe
- 61: Sensor
- 63: Funktionsmodul
- 65: Anzeigeeinrichtung
- 67: Mikroprozessor

## Patentansprüche

1. Feldgerät, wie Stellungsregler, I/P-Wandler oder dergleichen, für eine prozesstechnische Anlage, umfassend: einen elektrischen Eingangsanschluss, an dem eine elektrische Energieversorgung anschließbar ist, eine Elektronikeinheit (3) zum Verarbeiten eines Prozesssignals, eine zwischen dem Eingangsanschluss und der Elektronikeinheit (3) geschaltete Eingangsschaltung (5) zum Begrenzen einer elektrischen Versorgungsspannung (U) für die Elektronikeinheit (3), **dadurch gekennzeichnet, dass** die Eingangsschaltung (5) einen Speicher für elektrische Energie und eine Leistungsmanagementelektronik (23) aufweist, die einen Energiesollwerterfasser zum Feststellen eines für die Verarbeitung des Prozesssignals durch die Elektronikeinheit (3) aktuell notwendigen, elektrischen Energie-Sollniveaus aufweist, wobei die Eingangsschaltung (5) eine Einrichtung zum Vergleichen des Energie-Sollniveaus mit einem an dem Eingangsanschluss anliegenden elektrischen EnergieIstniveau aufweist, um einen Energiebetrag zu identifizieren, der zur Speicherung auf den elektrischen Speicher abzweigbar ist, und dass die Leistungsmanagementelektronik (23) dazu ausgelegt ist, den das Energie-Sollniveau überschießenden elektrischen Energiebetrag der an der Eingangsschaltung anliegenden elektrischen Energieversorgung in den Speicher zu laden.

2. Feldgerät nach Anspruch 1, **dadurch gekennzeichnet, dass** der Energiesollwerterfasser eine Signalverbindung jeweils zu einem Energieverbraucher des Feldgeräts (1), wie einem Mikroprozessor, einer Anzeige, wenigstens einem Sensor, einem Signalfunkmodul, etc., aufweist.

3. Feldgerät nach Anspruch 1 oder 2, **dadurch gekennzeichnet, dass** der Speicher mit einer Energieversorgungsverbindung jeweils zu einem Energieverbraucher des Feldgeräts (1), wie einem Mikroprozessor, einer Anzeige, wenigstens einem Sensor, einem Signalfunkmodul, etc., elektrisch verbunden ist.

4. Feldgerät nach einem der vorstehenden Ansprüche, **dadurch gekennzeichnet, dass** der Speicher Teil einer eigensicheren Elektronikschaltung und insbesondere in Kunststoff vergossen ist.

5. Feldgerät nach einem der vorstehenden Ansprüche, **dadurch gekennzeichnet, dass** der Speicher einen Kondensator (25), insbesondere einen Doppelschichtkondensator, einen Elektrolytkondensator, oder ein Akkumulator, insbesondere ein Lithium-Akku, ist.

6. Feldgerät nach einem der vorstehenden Ansprüche, **dadurch gekennzeichnet, dass** die Leistungsmanagementelektronik (23) derart vorab eingestellt ist, dass bei Ausfall der elektrischen Energieversorgung wenigstens ein vorbestimmter Verbraucher des Feldgeräts (1), wie ein Sensor, ein Datenspeicher, eine Kommunikationseinrichtung, etc., durch den Speicher elektrisch betrieben wird.

7. Feldgerät nach einem der vorstehenden Ansprüche, **dadurch gekennzeichnet, dass** die Vergleichseinrichtung eine elektrische Schaltung aufweist, in der ein Spannungsbegrenzer, insbesondere eine Diode, integriert ist, und/oder dass die Vergleichseinrichtung einen elektrischen Widerstand, ein Elektronikteil zum Detektieren eines Spannungsabfalls an dem Widerstand und einen mit dem Elektronikteil verbundenen Ladeschalter aufweist, der einen passiven Schaltzustand, in dem eine elektrische Verbindung zwischen dem Speicher und dem Eingangsanschluss unterbrochen ist, und einen aktiven Schaltzustand aufweist, in dem die elektrische Verbindung zwischen dem Speicher und dem Eingangsanschluss zum Laden des Speichers geschlossen ist, wobei insbesondere das Elektronikteil den Ladeschalter zum Wechseln von dem passiven Schaltzustand in den aktiven Schaltzustand anspricht, wenn es einen Spannungsabfall an dem Widerstand detektiert.

8. Feldgerät nach Anspruch 7, **dadurch gekennzeichnet, dass** das Elektronikteil ein Operationsverstärker ist.

9. Feldgerät nach Anspruch 7 oder 8, **dadurch gekennzeichnet, dass** der Ladeschalter ein Transistor ist.

10. Feldgerät nach einem der vorstehenden Ansprüche, **dadurch gekennzeichnet, dass** die Leistungsmanagementelektronik (23) einen Spannung-Strom-Wandler aufweist, der dem Speicher nachgeschaltet ist und abhängig von dem durch den Speicher zu versorgenden Verbraucher des Feldgeräts (1) die Stromstärke durch Veränderung der Spannung anpasst, wobei insbesondere der Spannung-Strom-Wandler als Step-Up- und/oder Step-Down-Regler ausgeführt ist.

11. Feldgerät nach einem der vorstehenden Ansprüche, **dadurch gekennzeichnet, dass** die Leistungsmanagementelektronik (23) eine Zuschaltanordnung aufweist, der eine Energieversorgungsverbindung jeweils zu einem Verbraucher des Feldgeräts (1) unterbrechen oder schließen kann, wobei der jeweilige Verbraucher bei geschlossener Energieversorgungsverbindung elektrische Energie direkt insbesondere über einen Spannung-Strom-Wandler von dem Speicher abzieht, wobei insbesondere die Zuschaltanordnung für jeden Verbraucher des Feldgeräts (1) einen Einzelschalter aufweist, wobei jeder Einzelschalter als elektronische Schalter ausgeführt sind.

12. Feldgerät nach einem der vorstehenden Ansprüche, **dadurch gekennzeichnet, dass** die Leistungsmanagementelektronik (23) dazu ausgelegt ist, bei Ausfall der elektrischen Energieversorgung und/oder bei einer Unterdeckung des Energiebedarfs des Feldgeräts (1) vorbestimmte Einzelschalter der Zuschaltanordnung zu schließen.

13. Verfahren zum Versorgen eines Feldgeräts, wie eines Stellungsreglers, eines I/P-Wandlers oder dergleichen, für eine prozesstechnische Anlage, wobei das Feldgerät (1) eine Elektronikeinheit (3) und einen elektrischen Eingangsanschluss, an dem eine elektrische Energieversorgung anschließbar ist, umfasst und von der elektrischen Energieversorgung, insbesondere einem 4 - 20mA Stromsignal zum Stellen einer Stellarmatur oder einem Feldbus, zum Generieren und Abgeben eines Prozesssignals betrieben ist, **dadurch gekennzeichnet, dass** ein von der Elektronikeinheit (3) zum Generieren und Abgeben des Prozesssignals aktuell notwendiges elektrisches Energie-Sollniveau festgestellt wird, wobei das Energie-Sollniveau mit einem an dem Eingangsanschluss anliegenden elektrischen Energieistniveau verglichen wird, um einen Energiebetrag zu identifizieren, der zur Speicherung auf einen elektrischen Speicher abzweigbar ist, und dass der das Energie-Sollniveau überschiessende elektrische Energiebetrag der elektrischen Energieversorgung in den elektrischen Speicher gespeichert wird.

14. Verfahren nach Anspruch 13, **dadurch gekennzeichnet, dass** die gespeicherte Energie zum Betreiben von Verbrauchern des Feldgeräts (1) genutzt wird.

## Claims

1. A field device, such as a positioner, an I/P-converter or the like for a processing plant, comprising: an electric input to which an electric power supply can be connected, an electronic unit (3) for processing a process signal, an input circuit (5) connected between the input and the electronic unit (3) for limiting the supply voltage (U) of the electronic unit (3), **characterised in that**
the input circuit (5) comprises a storage unit for electric energy and a power management circuitry (23) comprising a power requirement acquisitor for determining an actual required power level necessary for processing the process signal by the electronic unit (3), wherein the input circuit (5) comprises a means for comparing the required power level with an actual power level supplied to the input in order to identify a power amount that can be diverted for storage in the electric storage unit and that the power management circuitry (23) is designed to charge the amount of electric energy of the power supply connected to the input circuit (5) that exceeds the required power level into the electric storage unit.

2. Field device according to claim 1, **characterised in that** the power requirement acquisitor has a signal connection to one power consumer of the field device (1) such as a micro-processor, a display, at least one sensor, one signal module, etc., respectively.

3. Field device according to claim 1 or 2, **characterised in that** the storage unit is electrically connected via a power supply line to one power consumer of the field device (1) such as a micro-processor, a display, at least one sensor, a radio signal transmission, etc., respectively.

4. Field device according to one of the preceding claims, **characterised in that** the storage unit is part of an intrinsically safe electronic circuit and in particular cast into synthetic material.

5. Field device according to one of the preceding claims, **characterised in that** the storage unit is a capacitor (25), in particular a double layer capacitor, an electrolyte capacitor, or an accumulator, in particular a lithium accumulator.

6. Field device according to one of the preceding claims, **characterised in that** the power management circuitry (23) is adjusted such that in case of a failure of the permanent electric power supply at least one pre-determined power user of the field device (1), such as a sensor, a data storage unit, a combination device, etc., remains electrically supplied by the storage unit.

7. Field device according to one of the preceding claims, **characterised in that** the comparison means features a circuit in which a voltage limiter, in particular a diode is integrated, and/or that the comparison means is fitted with an electric resistor, an electronic component for detecting a voltage drop across the resistor and a load switch connected with the electronic component, the load switch having a passive switching status in which an electric connection between the storage unit and the input is interrupted, and an active switching status in which the electric connection between the storage unit and the input is closed for charging the storage unit, wherein in particular the electronic component activates the switch for changing from the passive switching status to the active switching status when a voltage drop is detected across the resistor.

8. Field device according to claim 7, **characterised in that** the electronic component is an operational amplifier.

9. Field device according to claim 7 or 8, **characterised in that** the load switch is a transistor.

10. Field device according to one of the preceding claims, **characterised in that** the power management circuitry (23) has a voltage-current-converter connected downstream to the storage unit and adapting the current intensity by altering the voltage in dependence of the power consumer of the field device (1) to be supplied by the storage unit, wherein in particular the voltage-current converter is implemented as a step-up and/or step-down converter.

11. Field device according to one of the preceding claims, **characterised in that** the power management circuitry (23) has a connecting circuitry capable of interrupting or closing a power supply line to a respective power consumer of a field device (1), wherein for a closed power supply line the respective consumer draws electric power from the storage unit directly, in particular via a voltage-current converter, wherein in particular the connecting circuitry has an individual switch for each power consumer of the field device (1), wherein each individual switch is implemented as an electronic switch.

12. Field device according to one of the preceding claims, **characterised in that** the power management circuitry (23) is designed such as to close pre-determined individual switches of the connecting circuitry in case of failure of the electric power supply and/or an undersupply of power to the field device (1).

13. Method for powering a field device for a processing plant, such as a positioner, an I/P-converter or the like, wherein the field device (1) comprises an electronic unit (3) and an electronic input circuit to which an electric power supply is attachable and is driven by the electric power supply, in particular a 4 - 20mA current signal for positioning a positioning member or by a field bus for generating and outputting a process signal, **characterised in that** an actual required power level of the electronic unit (3) for generating and outputting the process signal is determined, wherein the required powerl level is compared with an actual power level supplied to the input circuit in order to identify a power amount that can be diverted for storage in the electric storage unit, and that the electric power amount of the power supply exceeding the required power level is stored in the electric storage unit.

14. Method according to claim 13, **c h a r a c t e r i s e d** in that the stored energy is used for driving power consumers of the field device (1).

## Revendications

1. Appareil de terrain, comme un régulateur de position, un convertisseur I/P ou similaires pour une installation technique de processus, comprenant : une connexion d'entrée électrique sur laquelle peut être raccordée une alimentation électrique, une unité électronique (3) pour le traitement d'un signal de processus, un circuit d'entrée (5) connecté entre la connexion d'entrée et l'unité électronique (3) pour limiter une tension d'alimentation (U) électrique pour l'unité électronique (3), **caractérisé en ce que** le circuit d'entrée (5) comporte un accumulateur d'énergie électrique et une électronique de gestion (23) de la puissance, qui comporte un détecteur de la valeur de consigne d'énergie pour évaluer un niveau de consigne d'énergie actuellement requis pour le traitement du signal de processus par l'unité électronique (3), le circuit d'entrée (5) comportant un système de comparaison du niveau de consigne d'énergie avec un niveau réel d'énergie appliqué à la connexion d'entrée pour identifier une valeur d'énergie qui peut être dérivée pour l'accumulation sur l'accumulateur électrique et **en ce que** l'électronique de gestion (23) de la puissance est dimensionnée pour charger dans l'accumulateur la valeur d'énergie excédant le niveau de consigne d'énergie électrique de l'alimentation en énergie électrique appliquée au circuit d'entrée.

2. Appareil de terrain selon la revendication 1, **caractérisé en ce que** le détecteur de valeur de consigne d'énergie comporte une liaison signalétique respectivement vers un consommateur d'énergie de l'appareil de terrain (1), comme un microprocesseur, un affichage, au moins un capteur, un module de signaux radio, etc.

3. Appareil de terrain selon la revendication 1 ou 2, **caractérisé en ce que** l'accumulateur est relié électriquement via une liaison d'alimentation en énergie avec un consommateur d'énergie de l'appareil de terrain (1), comme un microprocesseur, un affichage, au moins un capteur, un module de signaux radio, etc.

4. Appareil de terrain selon l'une quelconque des revendications précédentes, **caractérisé en ce que** l'accumulateur est un élément d'un circuit électronique à sécurité intrinsèque et est notamment coulé dans une matière plastique.

5. Appareil de terrain selon l'une quelconque des revendications précédentes, **caractérisé en ce que** l'accumulateur est un condensateur (25), notamment un condensateur double-couche, un condensateur électrolytique ou un accumulateur, notamment un accu au lithium.

6. Appareil de terrain selon l'une quelconque des revendications précédentes, **caractérisé en ce que** l'électronique de gestion (23) de la puissance est préalablement réglée de telle sorte qu'en cas de panne de l'alimentation en énergie électrique, au moins un consommateur prédéfini de l'appareil de terrain (1), comme un capteur, un système de communication, etc. soit actionné électriquement via l'accumulateur.

7. Appareil de terrain selon l'une quelconque des revendications précédentes, **caractérisé en ce que** le système de comparaison comporte un circuit électrique dans lequel est intégré un limiteur de tension, notamment une diode et/ou **en ce que** le système de comparaison comporte une résistance électrique, une pièce électronique pour détecter une chute de tension sur la résistance et un interrupteur de charge relié avec la pièce électronique qui présente un état de commutation passif, dans lequel une connexion électrique entre l'accumulateur et la connexion d'entrée est interrompue et un état de commutation actif, dans lequel la connexion électrique entre l'accumulateur et la connexion d'entrée est fermée pour charger l'accumulateur, notamment la pièce électrique amorçant l'interrupteur de charge pour passer de l'état de commutation passif à l'état de commutation actif, lorsqu'elle détecte une chute de tension sur la résistance.

8. Appareil de terrain selon la revendication 7, **caractérisé en ce que** la pièce électronique est un amplificateur d'opération.

9. Appareil de terrain selon la revendication 7 ou 8, **caractérisé en ce que** l'interrupteur de charge est un transistor.

10. Appareil de terrain selon l'une quelconque des revendications précédentes, **caractérisé en ce que** l'électronique de gestion (23) de la puissance comporte un convertisseur de tension-courant, qui est monté en aval de l'accumulateur et qui indépendamment du consommateur de l'appareil de terrain (1) qui doit être alimenté par l'accumulateur, adapte l'intensité de courant par variation de la tension, notamment le convertisseur tension-courant étant conçu en tant que régulateur step-up et/ou step-down.

11. Appareil de terrain selon l'une quelconque des revendications précédentes, **caractérisé en ce que** l'électronique de gestion (23) de la puissance comporte un agencement de mise en circuit qui est apte à interrompre ou à fermer une liaison d'alimentation en énergie chaque fois vers un consommateur de l'appareil de terrain (1), lorsque la liaison d'alimentation en énergie est fermée, le consommateur concerné prélevant directement de l'énergie électrique sur l'accumulateur, notamment par l'intermédiaire d'un convertisseur de tension-courant, notamment l'agencement de mise en circuit comportant un interrupteur individuel pour chaque consommateur de l'appareil de terrain (1), chaque interrupteur individuel étant réalisé sous la forme d'un interrupteur électronique.

12. Appareil de terrain selon l'une quelconque des revendications précédentes, **caractérisé en ce que** l'électronique de gestion (23) de la puissance est dimensionnée pour fermer des interrupteurs individuels prédéfinis de l'agencement de mise en circuit en cas de panne de l'alimentation en énergie électrique et/ou en cas de non-couverture du besoin en énergie de l'appareil de terrain (1).

13. Procédé destiné à alimenter un appareil de terrain, comme un régulateur de position, un convertisseur I/P ou similaires pour une installation technique de processus, l'appareil de terrain (1) comprenant une unité électronique (3) et une connexion d'entrée électrique sur laquelle peut se raccorder une alimentation en énergie électrique et étant actionné par l'alimentation en énergie électrique, notamment un signal de courant de 4 - 20 mA pour régler une vanne de réglage ou un bus de champ, pour générer et délivrer un signal de processus, **caractérisé en ce qu'**il est évalué un niveau de consigne d'énergie électrique actuellement nécessaire pour l'unité électronique (3) pour générer et délivrer le signal de processus, le niveau de consigne d'énergie étant comparé avec un niveau réel d'énergie électrique appliqué sur la connexion d'entrée pour identifier une valeur d'énergie qui peut être dérivée pour l'accumulation sur un accumulateur électrique et **en ce que** la valeur d'énergie électrique excédant le niveau de consigne d'énergie électrique de l'alimentation en énergie est accumulée dans l'accumulateur électrique.

14. Procédé selon la revendication 13, **caractérisé en ce que** l'énergie accumulée est utilisée pour actionner des consommateurs de l'appareil de terrain (1).
